# EUROPÄISCHE PATENTSCHRIFT

(11) **EP 0 791 547 B1**
(45) Veröffentlichungstag und Bekanntmachung des Hinweises auf die Patenterteilung: **19.06.2002**
(21) Anmeldenummer: 96120159.7
(22) Anmeldetag: 16.12.1996
(51) Int. Cl.: B65G 69/00

(54) **Abdichtung des Spaltes zwischen dem Rand einer Gebäudeöffnung und dem Heck eines andockenden Fahrzeuges**
Device for sealing the gap between the edge of an aperture in a building and the rear of a docking vehicle
Dispositif d'étanchéité de l'interstice entre le bord d'une ouverture d'un bâtiment et l'arrière d'un véhicule amarrant

(30) Priorität: 20.02.1996 DE 19606219
(43) Veröffentlichungstag der Anmeldung: 27.08.1997
(73) Patentinhaber: Alten Gerätebau GmbH, 30974 Wennigsen (DE)
(72) Erfinder: Alten, Kurt, 30974 Wennigsen (DE); Borchardt, Horst, 30974 Wennigsen (DE)
(74) Vertreter: Depmeyer, Jochen

(56) Entgegenhaltungen:
- DE-A- 4 128 168
- DE-A- 4 242 087
- US-A- 4 070 801

## Beschreibung

Die Erfindung betrifft eine verformbare Dichtung des Spaltes zwischen dem Rand einer Gebäudeöffnung und dem Heck eines andockenden Fahrzeuges mit einer lappigen, verformbaren Schürze aus zwei zu beiden Seiten der Gebäudeöffnung angeordneten, verformbaren senkrechten Streifen und einem im Bereich der oberen Streifenenden befindlichen, an einem Querträger aufgehängten Querteil, von dem aus sich nach hinten zum Gebäude hin eine Dachplane erstreckt, wobei die seitlich aussen gelegenen, versteiften Ränder der seitlichen Streifen je durch zwei Lenkerpaare mit dem Gebäude verbunden sind, die je zwei im Winkel zueinander angeordnete, ein V beschreibende Lenker aufweisen in der Weise, dass die Spitze des V des oben gelegenen Paares nach oben und die Spitze des unten gelegenen Paares nach unten zeigt, und wobei ferner die Spitzen zusammengehöriger Lenkerpaare durch eine Zugfeder verbunden sind und der der Schürze abgekehrte Lenker des oberen Paares in Richtung auf den versteiften Rand der seitlichen Streifen verlängert ist.

Eine solche Dichtung geht zum Beispiel aus dem Dokument DE-A-4242087 als bekannt hervor.

Bei den bekannten Dichtungen dieser Art ist der erwähnte, in Richtung auf den versteiften Rand der seitlichen Streifen verlängerte Schenkel an dem Rand gleitend geführt. Die Verlängerung des Lenkers hat dabei nur die Aufgabe, die Lenkerhalterung zu stabilisieren; bekannt ist sie auch nur bei solchen Dichtungen, bei denen die seitlichen Versteifungen mit dem Querträger fest verbunden sind. Insgesamt gesehen bildet dabei der Querträger mit den seitlichen Versteifungen ein nach unten hin offenes U.

Der Erfindung liegt die Aufgabe zugrunde, die obigen Dichtungen so auszubilden, dass unter Nutzung der obigen Lenkenanordnung eine nachgiebige Dichtung der obigen Art mit einem heb- und senkbaren Dachteil ( Querträger mit Dachplane ) ermöglicht wird.

Zur Lösung dieser Aufgabe dient erfindungsgemäss der verlängerte Schenkel zur Halterung des Querträgers.

Demgemäss wird der Querträger mit dem Dachteil und dem gardinenartig herabhängenden Querteil vorne an dem verlängerten Schenkel befestigt. Da dieser als Lenker ausgeführt ist, kann er bei andockenden oder abzuziehenden Fahrzeugen im Sinne der Beaufschlagung des Querteils durch das Fahrzeug eine ausweichende, nach oben gerichtete Bewegung ausführen, die zwar auch zu einer Bewegung der übrigen Lenker führt, jedoch geringfügig und unbedeutend ist.

Um die Lenkerbewegungen insgesamt sicherzustellen, ist das dem Gebäude zugekehrte Ende des verlängerten Lenkers in einer senkrechten Schiene gleitend nach oben bzw. unten geführt.

Weitere Einzelheiten der Erfindung werden anhand der Zeichnung erläutert, in der ein Ausführungsbeispiel der Erfindung dargestellt ist. Es zeigen :
Fig. 1 eine verformbare Dichtung zur Abdichtung des Spaltes zwischen dem Heck eines andockenden Fahrzeuges und einer Gebäudeöffnung, wobei jedoch das in der Ansicht vorne liegenden Seitenteil der Dichtung nicht dargestellt ist,
Fig. 2 eine Ansicht der Dichtung gemäss Fig. 1 in Richtung des Pfeiles II gesehen, und zwar ebenfalls bei nicht dargestelltem Seitenteil, und
Fig. 3 einen Teilschnitt nach der Linie III - III von Fig.1.

Über die Öffnung 1 eines Gebäudes 2 mit der Wandung 3 sollen Fahrzeuge be- und entladen werden. Dazu werden sie mit dem Heck an das Gebäude 2 herangeführt. Um Witterungseinflüsse auszuschliessen, ist zwischen dem Heck des Fahrzeuges und dem Gebäude die in der Zeichnung dargestellte verformbare, in Richtung auf das Gebäude 2 nachgiebige Dichtung vorgesehen.

Vorgesehen ist eine vom Heck des Fahrzeuges beaufschlagbare, lappige Schürze aus zwei zu beiden Seiten der Gebäudeöffnung 1 befindlichen senkrechten Streifen 4 und einem das obere Ende dieser Streifen überdeckenden Querteil 6, das gardinenartig herabhängt. Eine seitliche Abdeckung vom äusseren Rand 7 der Streifen 4 aus erfolgt durch Seitenteile 8, die am Gebäude 2 befestigt sind. Zudem ist ein Dachteil 9 vorgesehen, das ebenfalls am Gebäude 2 befestigt und vorne bis zum Querteil 6 geführt ist.

Die Teile 4, 6, 8 und 9 bestehen aus eine ggfs. gummierten, abriebfesten, biegsamen Gewebe od. dgl., ggfs. aus einer Folie.

Um die vorgenannten lappigen Bestandteile der Dichtung zu halten und eine gewisse elastische Nachgiebigkeit in Richtung auf das Gebäude zuzulassen, wenn die vorne liegenden Schürze von einem Fahrzeug beaufschlagt wird, sind mehrere Massnahmen vorgesehen.

Die seitlich aussen gelegenen Ränder 7 sind an senkrechten, steifen Stäben 10 befestigt, das Querteil 6 ist an einem Metallprofil 11 aufgehängt, das gleichzeitig zur Befestigung des Dachteils 9 dient. Zudem ist am Gebäude 2 ein weiteres Profil 12 aus Metall befestigt, das u.a. der Befestigung des Seitenteils 8 dient.

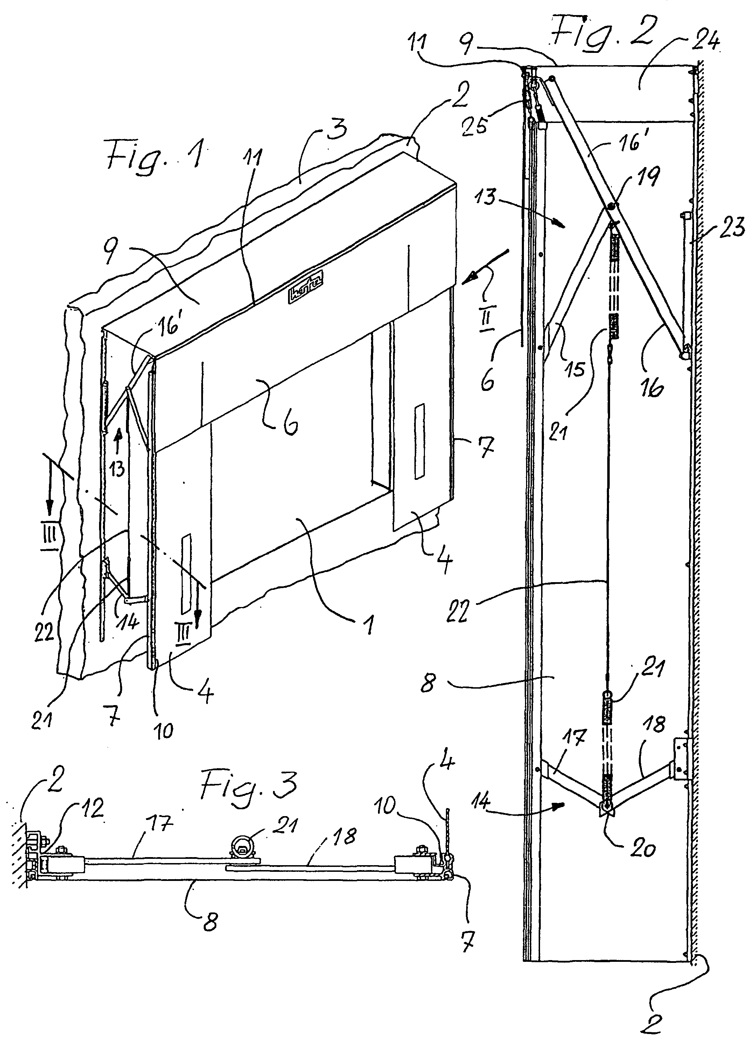

Die Halterung und Lagerung der Stäbe 10 erfolgt durch ein oberes Lenkerpaar 13 und ein unteres Lenkerpaar 14, deren Lenker 15, 16 und 17,18 miteinander und an den Stäben 10 und Profilen 12 gemäss Fig. 3 angelenkt sind, und zwar in der Weise, dass das von den Lenkern 15, 16 gebildete, vorzugsweise symmetrische V nach oben und das von den Lenkern 17, 18 gebildete V nach unten zeigt. Die Spitzen 19, 20 stehen dabei durch eine Zugfeder bzw. zwei Federn 21 mit Zwischenseil 22 derart in Verbindung, dass sich die Schürze der Dichtung in Richtung auf das Gebäude 2 elastisch nachgiebig bewegen lässt unter weiterer Straffung der Federn 21 und Verringerung des Winkels, den die vorerwähnten Lenker 15 - 18 miteinander bilden. Beim Nachlassen der Beaufschlagung durch das Fahrzeug nehmen die Lenker wieder die Stellung gemäss Fig. 1 und 2 ein.

Wichtig ist nun, dass der Lenker 16 an seinem gebäudeseitigen Ende an einer senkrechten Führung 23 auf und ab geführt ist. Das Ende des Lenkers 16 kann sich also von der Grundstellung gemäss Fig. 1 und 2 nach oben und zurück bewegen. Darüber hinaus ist der Lenker 16 geradlinig schräg nach oben verlängert und dort fest und unverdrehbar mit dem Metallprofil 11 verbunden. Die Verlängerung 16' dient somit der Unterstützung und Halterung des Dachteils 9 und des Querteils 6. Somit ist das Metallprofil 11 mit den Teilen 6, 9 anhebbar und wieder absenkbar.

Die Stäbe 10 mit den Teilen 4, 8 enden nahe unterhalb des Dachteils 9. Dieser so entstehende Spalt ist seitlich durch einen am Dachteil 9 befestigten Überhang bei 24 überdeckt, zudem sind die Stäbe 10 elastisch nachgiebig durch Federzug 25 am Metallprofil 11 aufgehängt. Ferner können die einander zugekehrten Ränder der beiden Streifen 4 oben durch einen Federzug verbunden sein.

Durch diese Halterung des Metallprofils 11 ist zwar eine Koppelung zwischen den Seitenteilen 4 einerseits und dem Dachteil 9 andererseits gegeben, jedoch ist diese vergleichsweise lose. Eine nachteilige gegenseitige Behinderung beim Anlüften des Dachteils 9 und bei der Fluchtbewegung der Streifen 4 in Richtung auf das Gebäude 2 finden nicht statt.

Es versteht sich, dass die Lenkeranordnung so ausgeführt sein muss, dass eine ausreichende Seitensteifigkeit der Dichtung gewährleistet ist, was z.B. durch Einfassung der Lenkerenden in U-Profilen gemäss Fig. 3 erreicht werden kann.

Für die oben beschriebene Aufhängung der biegsamen Schürze in Verbindung mit einem anhebbaren Dachteil ist es vorteilhaft, wenn die das obere Lenkerpaar 13 bildenden Lenker 15, 16 mit der Senkrechten einen Winkel von etwa 20 - 35° bilden, die entsprechenden Winkel bei dem unteren Lenkerpaar hingegen etwa doppelt so gross sind im Vergleich zum Lenkerpaar 13 und vorzugsweise etwa 50 - 70° betragen. Aus den vorgenannten Gründen muss auch vorzugsweise die Länge der Verlängerung 16' derjenigen des zugehörigen Lenkers 16 entsprechen, die wiederum auch etwa dem Tiefenmass der unverformten Dichtung - gemessen vom Streifen 4 bis zur Wandung 3 des Gebäudes 2 - entsprechen soll.

## Patentansprüche

1. Verformbare Dichtung des Spaltes zwischen dem Rand einer Gebäudeöffnung (1) und dem Heck eines an diese herangefahrenen Fahrzeuges mit einer lappigen, verformbaren Schürze aus zwei zu beiden Seiten der Gebäudeöffnung (1) angeordneten, verformbaren, senkrechten Streifen (4) und einem im Bereich der oberen Streifenenden befindlichen , an einem Querträger aufgehängten, lappigen Querteil (6), von dem aus sich nach hinten zum Gebäude hin eine Dachplane (9) erstreckt, wobei die seitlich aussen gelegenen, versteiften Ränder (7) der Streifen (4) je durch zwei Lenkerpaare (13,14) mit dem Gebäude verbnden sind, die je zwei im Winkel zueinander angeordnete, ein V beschreibende Lenker (15,16,17,18) aufweisen in der Weise, dass die Spitze des V des oben gelegenen Paares (15,16) nach oben und die Spitze des V des unten gelegenen Paares (17,18) nach unten zeigt, und wobei ferner die Spitzen der beiden Lenkerpaare (13,14) durch eine Zugfeder verbunden sind und der der Schürze abgekehrte Lenker des oberen Paares (15,16) in Richtung auf den versteiften Rand (7) der Streifen (4) verlängert ist, **dadurch gekennzeichnet, dass** die Verlängerung (16') des Lenkers (16) zur Halterung des von den versteiften Rändern (7) der Streifen (4) getrennten Querträgers (11) dient.

2. Dichtung nach Anspruch 1, **dadurch gekennzeichnet, dass** die Verlängerung (16') verdrehungssteif mit dem Querträger (11) verbunden ist.

3. Dichtung nach Anspruch 1, **dadurch gekennzeichnet, dass** der Lenker (16) mit der Verlängerung (16') an seinem dem Gebäude (2) zugekehrten Ende an einer senkrechten Führung (23) nach oben und wieder nach unten bewegbar ist.

4. Dichtung nach Anspruch 1, **dadurch gekennzeichnet, dass** die das obere Lenkerpaar (13) bildenden Lenker (15,16) im Vergleich zum unteren Lenkerpaar (14) einen kleineren Winkel miteinander einschliessen.

5. Dichtung nach Anspruch 1, **dadurch gekennzeichnet, dass** die das obere Lenkerpaar (13) bildenden Lenker (15,16,16') im nicht verformten Zustand der Dichtung mit der Senkrechten einen Winkel von etwa 20 - 35° bilden.

6. Dichtung nach Anspruch 4, **dadurch gekennzeichnet, dass** die das untere Lenkerpaar (14) bildenden Lenker (17,18) im unverformten Zustand der Dichtung mit der Senkrechten einen Winkel von etwa 50 - 70° bilden.

7. Dichtung nach Anspruch 4, **dadurch gekennzeichnet, dass** die das obere Lenkerpaar (13) bildenden Lenker (15,16) einen Winkel miteinander bilden, der etwa doppelt so gross ist wie der Winkel, den die das untere Lenkerpaar (14) bildenden Lenker (17,18) miteinander bilden.

8. Dichtung nach einem oder mehreren voraufgehenden Ansprüchen, **dadurch gekennzeichnet, dass** das Längenmass der Verlängerung (16') demjenigen des zugehörigen Lenkers (16) entspricht.

9. Dichtung nach Anspruch 8, **dadurch gekennzeichnet, dass** das Längenmass zumindest etwa der Tiefe der unverformten Dichtung entspricht (( Abstand der Streifen (4) vom Gebäude (4)).

## Claims

1. Deformable seal for sealing the gap between the edge of a building opening (1) and the rear of a vehicle, which has been driven up to said opening, said seal having a soft, deformable apron formed from two deformable vertical strips (4), which are disposed on both sides of the building opening (1), and having a soft transverse member (6) which is situated in the region of the upper strip ends and is mounted on a cross-piece member, a top cover (9) extending from said transverse member rearwardly towards the building, the laterally externally situated, reinforced edges (7) of the strips (4) being each connected to the building by means of two respective pairs of guide means (13, 14), which each have two guide means (15, 16, 17, 18), which are disposed at an angle relative to each other and describe a "V", so that the point of the "V" of the upper pair (15, 16) points upwardly, and the tip of the "V" of the lower pair (17, 18) points downwardly, and the points of the two pairs of guide means (13, 14) also being connected by a tension spring, and the guide means of the upper pair (15, 16), remote from the apron, being extended in the direction of the reinforced edge (7) of the strips (4), **characterised in that** the extension (16') of the guide means (16) serves to mount the cross-piece member (11), which is separated from the reinforced edges (7) of the strips (4).

2. Seal according to claim 1, **characterised in that** the extension (16') is connected to the cross-piece member (11) in a twist-resistant manner.

3. Seal according to claim 1, **characterised in that** the guide means (16) is displaceable upwardly and again downwardly, with the extension (16') at its end facing the building (2), on a vertical guide (23).

4. Seal according to claim 1, **characterised in that** the guide means (15, 16), which form the upper pair of guide means (13), form a smaller angle with each other than the lower pair of guide means (14).

5. Seal according to claim 1, **characterised in that**, in the non-deformed state of the seal, the guide means (15, 16), which form the upper pair of guide means (13), form an angle of substantially 20 - 35° with the vertical.

6. Seal according to claim 4, **characterised in that**, in the non-deformed state of the seal, the guide means (17, 18), which form the lower pair of guide means (14), form an angle of substantially 50 - 70° with the vertical.

7. Seal according to claim 4, **characterised in that** the guide means (15, 16), which form the upper pair of guide means (13), form an angle with each other, which angle is substantially twice as large as the angle which the guide means (17, 18), which form the lower pair of guide means (14), form with each other.

8. Seal according to one or more of the preceding claims, **characterised in that** the longitudinal dimension of the extension (16') corresponds to that of the associated guide means (16).

9. Seal according to claim 8, **characterised in that** the longitudinal dimension corresponds at least substantially to the depth of the non-deformed seal (spacing between the strips (4) and the building (2)).

## Revendications

1. Dispositif d'étanchéité déformable de l'intervalle entre le bord d'une baie (1) de bâtiment et l'arrière d'un véhicule automobile qui s'en est approché, comportant une jupe flasque, déformable, constituée de deux bandes (4) verticales, déformables, montées de part et d'autre de la baie (1) du bâtiment, et une traverse (6) flasque, qui se trouve dans la région des extrémités supérieures des bandes, qui est suspendue à une poutrelle transversale et à partir de laquelle une bâche de toiture s'étend vers l'arrière vers le bâtiment, les bords (7) des bandes (4) rigidifiés et placés latéralement à l'extérieur étant reliés au bâtiment chaque fois par deux paires (13, 14) de bras de guidage qui comportent chacune deux bras (15, 16, 17, 18) de guidage, qui sont disposés en formant un angle, qui décrivent un V, de telle manière que le sommet du V de la paire (15, 16) placée en haut pointe vers le haut et le sommet du V de la paire (17, 18) placée en bas pointe vers le bas, et, de plus, les sommets des deux paires (13, 14) de bras de guidage étant reliés par un ressort de traction et le bras de guidage de la paire (15, 16) supérieure éloignée de la jupe étant prolongé dans la direction du bord (7) rigidifié des bandes (4), **caractérisé en ce que** le prolongement (16') du bras (16) de guidage sert à maintenir la poutrelle (11) transversale séparée par les bords (7) rigidifiés des bandes (4).

2. Dispositif d'étanchéité suivant la revendication 1, **caractérisé en ce que** le prolongement (16') est relié à la poutrelle (11) transversale de façon rigide en torsion.

3. Dispositif d'étanchéité suivant la revendication 1, **caractérisé en ce que** le bras (16) de guidage comportant le prolongement (16') à son extrémité tournée vers le bâtiment (2) peut être déplacé vers le haut et à nouveau vers le bas sur un dispositif (23) de guidage vertical.

4. Dispositif d'étanchéité suivant la revendication 1, **caractérisé en ce que** les bras (15, 16) de guidage formant la paire (13) de bras de guidage supérieure font l'un par rapport à l'autre un angle plus petit comparé à la paire (14) de bras de guidage inférieure.

5. Dispositif d'étanchéité suivant la revendication 1, **caractérisé en ce que** les bras (15, 16, 16') de guidage formant la paire (13) de bras de guidage supérieure font avec la verticale un angle d'environ 20 à 35° lorsque le dispositif d'étanchéité n'est pas déformé.

6. Dispositif d'étanchéité suivant la revendication 4, **caractérisé en ce que** les bras (17, 18) de guidage formant la paire (14) de bras de guidage inférieure font avec la verticale un angle d'environ 50 à 70° lorsque le dispositif d'étanchéité n'est pas déformé.

7. Dispositif d'étanchéité suivant la revendication 4, **caractérisé en ce que** les bras (15, 16) de guidage formant la paire (13) de bras de guidage supérieure font l'un par rapport à l'autre un angle qui est à peu près deux fois plus grand que l'angle que font l'un par rapport à l'autre les bras (17, 18) de guidage formant la paire (14) de bras de guidage inférieure.

8. Dispositif d'étanchéité suivant l'une ou plusieurs revendications précédentes, **caractérisé en ce que** la longueur du prolongement (16') correspond à celle du bras (16) de guidage associé.

9. Dispositif d'étanchéité suivant la revendication 8, **caractérisé en ce que** la longueur correspond au moins à peu près à la profondeur du dispositif d'étanchéité non déformé (distance des bandes (4) au bâtiment (2)).
